# EUROPÄISCHE PATENTANMELDUNG

(11) **EP 1 583 000 A2**
(43) Veröffentlichungstag der Anmeldung: **05.10.2005**
(21) Anmeldenummer: 04103422.4
(22) Anmeldetag: 16.07.2004
(51) Int. Cl.: G06F 17/30

(54) **Verfahren, mit welchem ein Endgerät Informationen, die mit einem EPC-Code assoziiert werden, aus einem EPC-Netzwerk holen kann**

(30) Priorität: 02.04.2004 EP 04101392
(71) Anmelder: Swisscom Mobile AG, 3050 Bern (CH)
(72) Erfinder: Lauper Eric, 3014 Bern (CH)
(74) Vertreter: P&TS Patents & Technology Surveys SA

(57) **Zusammenfassung**

Verfahren, mit welchem ein Endgerät (3) Informationen, die mit einem EPC-Code assoziiert werden, aus einem EPC-Netzwerk (4, 5, 6, 7) holen kann. Der EPC-Code ist virtuell und nicht - oder nicht permanent - mit einem RFID-Tag assoziiert.

Das Verfahren umfasst folgende Schritte:
das Endgerät (3) sendet eine Meldung mit dem EPC-Code über ein Telekommunikationsnetz (4) an einen Objekt Namen Server (6),
der Objekt Namen Server (6) beantwortet mit der Adresse der gewünschten PML-Seite,
das Endgerät (3) greift auf den Inhalt der benannten PML-Seite zu.

## Beschreibung

Die vorliegende Erfindung betrifft ein Verfahren mit welchem ein Endgerät Informationen, die mit einem EPC-Code assoziiert werden, aus einem EPC-Netzwerk holen kann.

Es sind bereits Verfahren bekannt, um anhand eines sogenannten RFID-Elements (oder Tags) Informationen über ein Produkt zu bekommen. Dabei verfügen manche Tags über einen Speicherbereich, der kontaktlos mit einem RFID-Lesegerät gelesen werden kann, und in welchem die gewünschte Information eingespeichert wird. Da der Preis der Tags stark von der Grösse des Speichers abhängig ist, werden solche Tags vor allem dann eingesetzt, wenn nur wenig Informationen benötigt werden; beispielsweise das Produktherstellungsdatum, eine Seriennummer, usw.

Es sind auch andere Verfahren bekannt, in welchen die gewünschte Information aus einer externen Datenbank geholt wird, in welcher mehrere Tags betreffende Informationen abgelegt werden. In diesem Fall wird ein Code der sich im Tag befindet, gelesen und als Recherchenkriterium in der externen Datenbank verwendet aus welcher die gewünschte Information abgeholt wird. Dabei ist die Verknüpfung zwischen einem Produkt und dem Datensatz in der Datenbank statisch und permanent; ein mit einem Tag markiertes Produkt ergibt stets Zugriff auf die gleiche Information.

Der angebotene Informationsinhalt ist dabei meistens nur von der Klasse des Objekts (Typ des Produkts) abhängig. Es sind jedoch auch Verfahren bekannt, bei welchen alle individuellen Objekte durch einen individuellen Code im RFID-Tag gekennzeichnet sind (beispielsweise mit einer Seriennummer). Mit diesem individuellen Code kann für jedes einzelne Produkt eine produktspezifische Information (beispielsweise das Verfalldatum oder die Dauer der Garantie) aus einer externen Datenbank abgeholt werden.

Das EPC-Global System (Electronic Product Code Global System) hat RFID-Tags mit EPC-Codes vorgeschlagen, mit welchen unter anderem die verbreiteten Barcodes ersetzt oder ergänzt werden sollen. EPC-Codes sind Nummern, die einen Vorsatz und drei Sets von Daten enthalten. Ein Set von Daten identifiziert einen Produkthersteller, ein zweites Set den exakten Typ von Produkt und ein drittes Set ist eine serielle Nummer, die jedes individuelle Produkt individuell markiert. Es wurden EPC-Codes mit 64 und 96 Bits vorgeschlagen; es könnten eventuell mehr sein.

EPCs Codes werden in RFID-Tags gespeichert. EPC-kompatible RFID-Tags kommunizieren kontaktlos, über eine lokale Funkschnittstelle, und gemäss einem offenen Standard, mit RFID-Lesegeräten.

Ein EPC-fähiges RFID-Tag enthält einen einzigen EPC-Code und jedem EPC-Code wird mit einem einzigen RFID-Tag assoziiert. Jeder EPC-RFID-Tag ist somit einmalig; das Lesen eines EPC-RFID-Tags erlaubt es dem Leser, eine Information zu holen, die unterschiedlich von der Information ist, die aus einem anderen EPC-RFID-Tag geholt werden kann. Jedes mit einem EPC-Code markierte Produkt wird somit mit einer individuellen, möglicherweise einmaligen Information assoziiert.

EPC-Lesegeräte verwenden eine Software-Technologie, die Savant heisst, um die Information, die mit einem EPC-Tag assoziiert ist, aus einem Server in einem EPC-Netzwerk zu holen. Zu diesem Zweck sendet das RFID-Lesegerät eine Meldung mit dem gelesenen EPC-Code über das EPC-Telekommunikationsnetz an einen Objekt Namen Server ONS. Der Objekt Namen Server beantwortet mit der Adresse der gewünschten PML-Seite, auf welcher der Dateninhalt, der mit dem EPC-RFID-Tag assoziiert ist, im PML-Format abgelegt ist. Das PML-Format (Product Marking Language) wird auch vom EPC-Global unterstützt. Das Endgerät kann dann mit dieser Adresse auf den Inhalt der benannten PML-Seite zugreifen.

Eine Einschränkung vom EPC-System ist, dass das System nur geeignet ist, um Informationen über Produkte zu holen, die mit einem EPC-kompatiblen RFID Tag markiert sind. Viele Produkte werden jedoch mit Tags markiert, die nicht EPC-kompatibel sind, oder sie werden gar nicht markiert. Ausserdem können gewisse Produkte gar nicht markiert werden, beispielsweise weil sie zu klein sind oder weil sie aus Metal sind und somit kaum eine Datenübertragung über eine Funkschnittstelle erlauben. Ausserdem können immaterielle Güter, beispielsweise Computer-Dateien, einschliesslich Daten und Software, oder Dienstleistungen, nicht mit einem RFID-Tag markiert werden.

Eine andere Einschränkung ist, dass der Zugriff auf Daten, die mit einem Produkt assoziiert sind, nur möglich ist, wenn man über ein passendes EPC-kompatibles RFID-Lesegerät verfügt. Solche Lesegeräte sind jedoch nicht immer verfügbar.

Ausserdem benötigen oft unterschiedliche Benutzer in unterschiedlichen Situationen unterschiedliche Informationen über dasselbe Produkt. Ein Produkthersteller will beispielsweise wissen wann das Produkt hergestellt wurde, währenddessen sich ein Endbenutzer vielleicht mehr für das Verfalldatum interessiert. Auch die Sprache der gewünschten Information ist benutzerabhängig.

Oft wird ein einheitlicher umfassender Informationsinhalt angeboten, der alle unterschiedlichen Bedürfnisse erfüllen soll. Ein solcher Inhalt lässt sich jedoch nur langsam und teuer durch das Telekommunikationsnetz übertragen und ist aufwendig zu lesen.

Es ist daher ein Ziel der vorliegenden Erfindung, ein neues Verfahren anzubieten, mit welchem diese Probleme gelöst werden.

Diese Ziele werden insbesondere durch ein Verfahren erreicht, mit welchem ein Endgerät Informationen, die mit einem EPC-Code assoziiert werden, aus einem EPC-Netzwerk holen kann,
wobei der benannte EPC-Code ein virtueller Code ist.

Es ist somit möglich die ganze Infrastruktur des EPC-Netzwerks zu verwenden und Daten und Information aus diesem Netzwerk zu holen, ohne EPC-kompatible RFID-Tag vorweisen zu müssen. Stattdessen können virtuelle EPC-Codes, verwendet werden. Virtuelle EPC-Codes haben ein standardisiertes Format für EPC-Nummern und mindestens ein der folgenden Merkmale:
- Sie sind nicht permanent, oder nie, mit einem RFID-Tag assoziiert.
- Sie sind nicht, oder nie, in einem RFID-Tag eingebettet.
- Sie können verwendet werden, um Information aus einem EPC-Netzwerk zu holen, ohne zuvor aus einem RFID-Tag gelesen zu werden.
- Sie werden unabhängig von RFID-Tags generiert
- Virtuelle EPC-Codes können in Speicherbereichen ausserhalb von EPC-kompatiblen RFID-Tags abgelegt werden oder dynamisch generiert werden.

Auf diese Weise können Informationen aus dem EPC-Netzwerk, zum Beispiel PML-Seiten Güter, die nicht mit einem RFID-Tag markiert sind, assoziiert werden, einschliesslich mit immateriellen Gütern wie Computerdateien, Computerprogramms, Dienstleistungen usw.

Die vorliegende Erfindung wird im Folgenden anhand der Figuren näher beschrieben. Es zeigen:
Figur 1 ein Blockschaltbild eines Systems mit einem Mobilgerät, einem RFID-Lesegerät, einem konventionellen RFID-Tag und einem Fernserver.
Figur 2 ein Blockschaltbild eines Systems mit einem Fernserver und einem Endgerät, in welchem eine Anwendung läuft, die einen virtuellen EPC-Code verwendet.
Figur 3 ein Blockschaltbild eines Systems mit einem Endgerät, in welchem ein virtueller EPC-Code gespeichert ist, und einem Fernserver.
Figur 4 ein Blockschaltbild eines Systems mit einem Endgerät, einem RFID-Lesegerät, und einem RFID-Code-Generator, der virtuelle EPC-Codes generiert.
Figur 5 die Struktur einer Meldung mit einem Code gemäss der Erfindung.

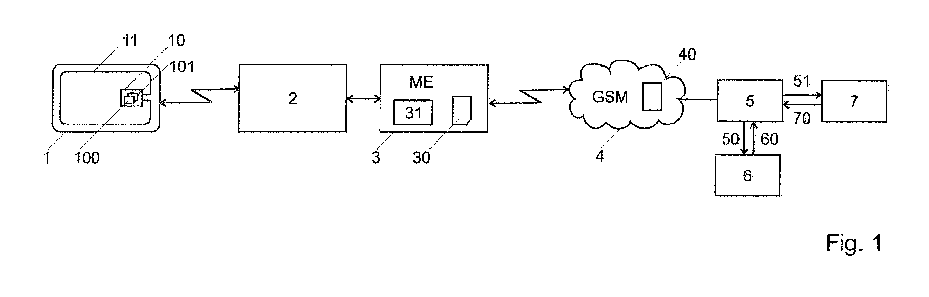

Die Figur 1 zeigt das System, das von einem Benutzer (zum Beispiel einem Mobilteilnehmer) verwendet wird, um Informationen (einschliesslich Dienstleistungen) über ein Produkt zu bestellen. Das System und Verfahren der Figur 1 sind in vielen Hinsichten neu, verwenden jedoch einen bekannten RFID-Tag 10 im EPC-Format.

Ein Endgerät, in diesem Fall ein tragbares Mobilgerät 3 umfasst einen RFID-Leseteil 2, oder ist mit einem solchen Leseteil verbunden (beispielsweise über eine USB, Firewire, PCCard, Compactflash, proprietäre, usw, Verbindung, oder über eine Bluetooth oder WLAN-kontaktlose Verbindung). Das Endgerät 3 enthält ein Identifizierungsmodul (zum Beispiel eine SIM-Karte 30), um das Gerät durch das Netz 4 zu identifizieren. Eine oder mehrere Software-Anwendungen können von einem Prozessor im Endgerät 3 ausgeführt werden.

Das Leseteil 2 umfasst einen Mikrokontroller und mindestens eine Antenne oder Spule, um kontaktlos Daten mit RFID-Komponenten (Tags) in einem Produkt 1 in der unmittelbaren Nähe auszutauschen. Die Datenübertragung erfolgt vorzugsweise im Frequenzbereich 13,56MHz, 900MHz und/oder 860-930MHz. Der Leseteil kann vorzugsweise wahlweise in verschiedenen Frequenzbereichen und mit unterschiedlichen RFIDs arbeiten. Die Tragweite beim Lesen der RFIDs beträgt vorzugsweise zwischen 2 und 10 Metern - je nach Orientierung des Leseteils und des Tags. Die Verbindung erfolgt vorzugsweise im Half-Duplex Modus mit einer ASK Backscatter Modulation.

Ein Produkt 1 umfasst ein oder mehrere Tags. Jedes Tag 10 umfasst mindestens einen Chip und eine Antenne. Jeder Chip 10 enthält einen permanenten Speicherbereich, in welchem während der Herstellung oder während der Personalisierung des Tags ein Code 100 im EPC-Format abgelegt wird.

Der EPC-Code identifiziert eindeutig jedes bestimmte Tag 1; jedes Tag hat einen anderen EPC-Code 100. Der EPC-Code ist vorzugsweise unverfälschbar.

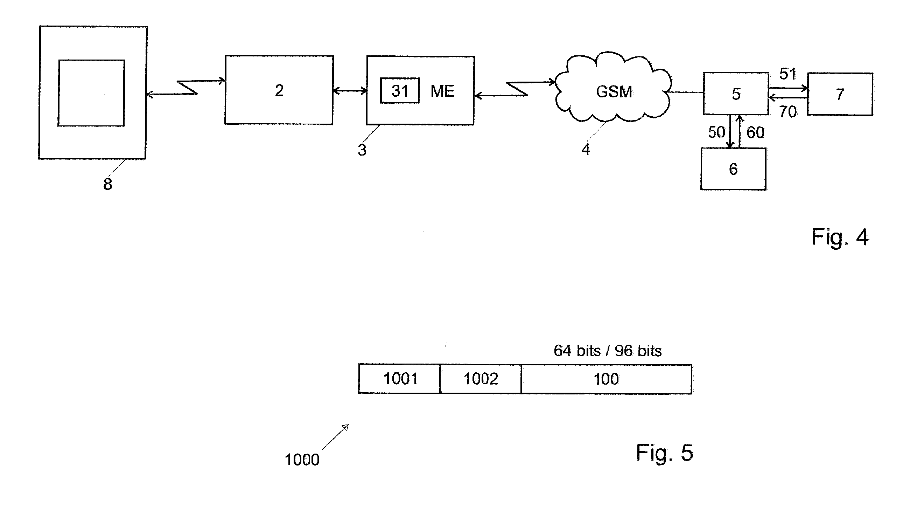

Der EPC-Code 100 umfasst vorzugsweise 64, 96 oder mehr Bits und ist hierarchisch organisiert. Die Antwort 1000 des Tags 10 an eine Anfrage des Leseteils 2 umfasst vorzugsweise einen Vorsatz 1001, redundante Prüfdaten 1002 und erst dann den Code 100 (Fig. 5).

Mehrere EPC-Codes in einem Produkt in der Nähe des Lesegeräts 2 können gleichzeitig oder vorzugsweise nacheinander gelesen werden. Die Anfrage des Lesegeräts 2, 3 kann einen Nummernbereich angeben und jedes Tag 10 entscheidet anhand dieses Nummernbereichs, mit welchem oder welchen Codes es diese Anfrage beantworten will.

Andere Daten können im Speicherbereich des Chips 10 abgelegt und vom Leseteil 2 gelesen werden.

Der Chip 10 ist vorzugsweise ein Nur-Lese-Chip, der günstig und in kleiner Grösse hergestellt werden kann; zwei Nur-Lese-Chips sind oft billiger als ein einziger wiederbeschreibbarer Chip. Wiederbeschreibbare Chips können aber im Rahmen der Erfindung auch eingesetzt werden.

EPC-Codes 100 werden vorzugsweise von einer gemeinsamen Autorität an verschiedene Produkthersteller, Mobilfunknetzanbieter und Mehrwertdienstanbieter verteilt; ein Teil des EPC-Codes gibt die Identität des Anbieters des Produktes 1 an. Der Produktanbieter reserviert eine Reihe von Codes bei der gemeinsamen Autorität und speichert einen Teil dieser EPC-Codes in Tags 10 die dann mit den Produkten vertrieben werden. Ein Produkt kann von mehreren Organisationen mit unterschiedlichen Tags versehen werden.

Mindestens eine Anwendung ist im Endgerät 3 vorgesehen, um EPC-Codes 100 in benachbarten Tags über das Leseteil 2 zu lesen, um weitere Informationen oder Dienste zu bestellen, wie später erläutert.

Das Lesen eines EPC-Codes wird vorzugsweise vom Endgerät 3 initiiert; möglich ist beispielsweise, dass das Endgerät stets oder periodisch nach benachbarten Tags sucht und EPC-Codes in gefundenen Tags liest und bearbeitet oder weiterleitet. In einer anderen, stromsparenden Variante wird das Lesen vom Benutzer des Endgeräts 3 initiiert, der eine entsprechende Anwendung startet oder einen Befehl eingibt, wenn er ein Tag lesen will. Das Lesen der Tags mit dem Endgerät 3 oder mit einem anderen Gerät kann auch von einer externen Vorrichtung (zum Beispiel einer Verkaufsstelle oder einem Automaten) über eine Schnittstelle im Nahbereich (zum Beispiel Bluetooth oder WLAN) über das Mobilfunknetz 4, oder über einen Link auf einer besuchten Web- oder WAP-Seite initiiert werden.

Der im Tag 1 gelesene EPC-Code wird von einer Anwendung 31 in eine Bestellmeldung (zum Beispiel in eine Kurzmeldung oder vorzugsweise in ein GPRS- oder UMTS-Paket) verpackt und an einen Server 5 gesendet, um weitere Informationen aus einem PML-Server 7 zu holen, wie später beschrieben.

Ein Mobilgerät 3 (zum Beispiel ein Mobilfunktelefon oder ein PDA mit einer Schnittstelle für ein zellulares Mobilfunknetz) kann Kurzmeldungen (zum Beispiel SMS und USSD) und Daten (zum Beispiel IP-Pakete) aus einem Mobilfunknetz 4 empfangen und an dieses Netz senden. Das Mobilfunknetz 4 ist beispielsweise ein GSM-, GPRS-, HSCSD-, EDGE-, UMTS- oder CDMA-Netz, über welches auch Daten übermittelt werden können.

Einfache Filter und Bearbeitungsmittel können als Teil einer Anwendung im Endgerät 3 und/oder im Leseteil 2 vorgesehen werden, um einen gelesenen EPC-Code zu bearbeiten. Die Anwendung kann beispielsweise nur gewisse Bereiche von EPC-Codes bearbeiten und weiterleiten. Redundanzprüfungen können auch vorgesehen werden, um nicht plausible und fehlerbehaftete Codes zu löschen. Bereits verwendete Codes werden vorzugsweise in einer Datenbank im Endgerät 3 zwecks zukünftiger Kontrolle, statistischen Bewertungen und Backups, gespeichert.

In einer Ausführungsform besteht das Passwort aus einem Teil des EPC-Codes 100 oder kann mit einer Funktion aus diesem EPC-Code ermittelt werden. Das Passwort kann sich beispielsweise aus einer mit einem öffentlichen Schlüssel prüfbaren Signatur des EPC-Codes ergeben. In diesem Fall kann das Passwort aus dem EPC-Code nur dann ermittelt werden, wenn der unbefugte Dritte die entsprechende Funktion oder den privaten Signierungsschlüssel kennt. Diese Ausführungsform hat den Vorteil, dass die Anwendung die Gültigkeit des Passwortes alleine anhand des EPC-Codes prüfen kann.

In einer anderen Variante wird die Gültigkeit des Passworts anhand einer Tabelle in der SIM-Karte 30, im Mobilgerät 3 oder in einem fremden Server geprüft.

In noch einer weiteren Variante wird das Passwort im Tag 10 gespeichert und vom Tag geprüft. Diese Variante erfordert jedoch teure Tags, die auch Passwörter speichern, empfangen und vergleichen können.

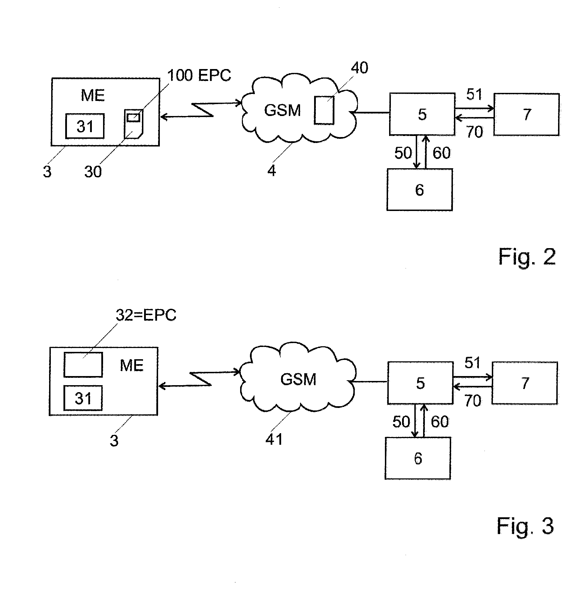

Das System und Verfahren der Figur 1, die ein Mobilgerät 3 für die Bearbeitung und Weiterleitung der EPC-Codes verwendet, hat bereits viele Vorteile gegenüber bekannten EPC-Systemen und -Verfahren, weist jedoch alle bereits erwähnte Nachteile von RFID-Tags auf. Wir werden jetzt anhand der Figuren 2 bis 4 mehrere Ausführungsformen des Verfahrens und Systems gemäss der Erfindung, die diese Nachteile vermeiden, beschreiben. Andere bis jetzt in Zusammenhang mit der Figur 1 beschriebene Verfahrens- und Systemsmerkmale, die nicht direkt das RFID-Tag 10 betreffen, können auch im Rahmen der Erfindung und in Zusammenhang mit den Ausführungsformen der Figuren 2 bis 4 verwendet werden.

Das mit der Figur 2 illustrierte System weist alle Merkmale des Systems der Figur 1 auf, ausser dass der EPC-Code 100 in einem Identifizierungsmodul 30, beispielsweise in einer SIM-Karte oder in einem Benutzer-Identifizierungsmodul im Endgerät 3 gespeichert ist. Das Endgerät 3 kann beispielsweise ein Mobiltelefon, ein PDA oder eine Set-top Box sein und kann auf den benannten Speicherbereich im Identifizierungsmodul 30 zugreifen, um den EPC-Code 100 zu lesen.

Der EPC-Code im Identifizierungsmodul 30 kann permanent oder semi-permanent abgelegt werden, beispielsweise im EEPROM des Moduls, dynamisch generiert werden oder über das Mobilfunknetz 4 geladen werden. Der Code 100 kann beispielsweise verwendet werden, um Prozesse, Software, Programmteile, Daten, Dateien oder Operationen im Modul 30 eindeutig zu identifizieren und um einen assoziierten Inhalt aus einem Fernserver 7 zu holen.

Eine Anwendung 31 im Mobilgerät 3 und/oder im Identifizierungsmodul 30 sendet den aus dem Identifizierungsmodul 30 gelesenen oder vom Identifizierungsmodul generierten EPC-Code über das Mobilfunknetz 4 an einen Server 5 an eine bekannte Adresse, vorzugsweise einen Server innerhalb der Infrastruktur 40 des Mobilfunknetzes 4. Die Dienstleistungs-Bestellmeldung wird optional vom Mobilgerät 3 oder von der SIM-Karte 30 signiert und/oder mit einem Zeitstempel versehen.

Der Server 5 verwaltet Bestellmeldungen mit Codes und Parametern, die von mehreren oder möglicherweise allen Endgeräten 3 und von konventionellen RFID-Lesern empfangen werden. Andere, komplexere Filter können im Server 5 vorgesehen werden, um Codes aus unterschiedlichen Bereichen verschieden oder gar nicht zu behandeln.

Ein Passwort kann auch vom Server 5 verlangt werden, damit der empfangene EPC-Code überhaupt behandelt wird; dieses Passwort kann aus dem Code selbst abgeleitet oder anhand einer Tabelle geprüft werden. Das Passwort wird beispielsweise zusammen mit dem EPC-Code 100 in einer Meldung an den Server 5 übertragen, oder separat im Rahmen eines Dialogs.

Der Server 5 kann auch die Identität des Benutzers des Mobilgeräts 3 prüfen. Dies ist umso zuverlässiger, wenn der Server 5 vom Betreiber des Mobilfunknetzes 5 verwaltet wird. In diesem Fall kann die Identität des Benutzers beispielsweise anhand der IMSI (International Mobile Subscriber Identity) oder einer anderen Mobilteilnehmer-Identität in der SIM-Karte zuverlässig ermittelt werden. Zugriff auf gewisse Informationen und Dienstleistungen werden nur gewissen Benutzern zur Verfügung gestellt (beispielsweise Mobilteilnehmern, die über ein entsprechendes Abonnement verfügen, die einen genügenden Saldo auf einem Geldkonto vorweisen oder deren Profil die Bereitstellung der Dienstleistung erlaubt).

Falls das Passwort falsch ist, oder wenn die gewünschte Information oder Dienstleistung aus einem anderen Grund nicht bereitgestellt werden kann, wird vorzugsweise eine Meldung an den Benutzer geschickt (beispielsweise über SMS, USSD oder Internet). Nach mehreren Fehlversuchen können aus Sicherheitsgründen weitere Versuche definitiv oder temporär gesperrt werden. Auf diese Weise kann verhindert werden, dass gültige EPC-Codes durch mehrmalige Versuche erraten werden.

Der Server 5 ist über Internet oder ein Intranet mit einem Objekt-Namen-Server 6 verbunden, in welchem jeder EPC-Code 100 mit der entsprechenden elektronischen Adresse einer elektronischen Hypertext-Seite verbunden ist. Es kann somit für jedes einzelne, individuelle Produkt auf eine andere Adresse zugegriffen werden.

Eine Anfrage 50 mit dem gerade empfangenen Code 100 wird vom Server 5 an den Objekt-Namen-Server 6 geleitet, der mit der entsprechenden elektronischen Adresse 60 antwortet. Die elektronische Adresse besteht beispielsweise aus einem URL oder einer anderen Adresse für ein TCP-IP Netz.

Der Objekt-Namen-Server 6 kann vom Betreiber des Servers 5 verwaltet werden und/oder von externen Entitäten (beispielsweise von der Organisation, die die EPC-Codes 100 verteilt). Mehrere Objekt-Namen-Server können miteinander verbunden werden, so dass die gewünschte Adresse in einem anderen Objekt-Namen-Server gesucht wird, wenn sie sich nicht im Server 6 befindet. Dies erlaubt zum Beispiel einem Mobilfunknetzbetreiber, auch EPC-Codes von anderen Organisationen zu bearbeiten. Ein lokaler Cache 6 eines externen Namendienstes kann auch im Server 5 oder in der Domain des Servers 5 vorgesehen werden.

Der Benutzer des Endgeräts 1 kann somit alle Codes 100 von allen Dienstleistungsanbietern stets an den gleichen Zielserver 5 senden, der aus dem Namen-Dienstserver 6 oder dem Netz von Namen-Dienstservern 6 die Adresse der Seite ermittelt, anhand welcher die gewünschte Information oder Dienstleistung bereitgestellt wird. Die Behandlung der Bestellmeldung ist somit nur vom EPC-Code abhängig. Gleiche Meldungen, die an unterschiedliche Server 5 mehrerer Dienstleistungsanbieter gelangen, können somit die Bereitstellung der genau gleichen Dienstleistung oder Information verursachen.

Die Verknüpfung im Namen-Dienstserver 6 zwischen einem Code 100 und einer Adresse kann vorzugsweise vom Anbieter der gewünschten Information jederzeit geändert werden (beispielsweise über ein dediziertes Web-Formular). Dies erlaubt die elektronische Adresse einer Seite oder einer Domain zu ändern ohne die Endbenutzer informieren zu müssen.

Die Adresse der gewünschten Seite kann somit eindeutig allein anhand des Codes, der im Tag 1 gespeichert ist, gefunden werden; die Seite, auf welche zugegriffen wird, ist somit völlig unabhängig von der Adresse oder Telefonnummer des Servers 5.

Der Server 5 empfängt die Antwort 60 vom Objekt-Namen-Server 6 mit der gewünschten Seitenadresse und greift auf die entsprechende PML-Seite im Server 7 zu oder auf ein Netz mit mehreren lokalen oder fernen Servern (Anfrage 51 und Antwort 70 auf Figur 1). Die Hypertext-Seite kann statisch sein; in einer bevorzugten Ausführungsform wird sie jedoch dynamisch in Abhängigkeit der übermittelten Parameter erzeugt.

Die Seite im Server 7, auf welche der Server 5 zugreift, umfasst möglicherweise einen Hypertext-Inhalt in einer Markupsprache. In einer bevorzugten Variante umfasst die Seite einen PML-Inhalt (Product Marking Language). Die Seite kann auch SOAP-Protokol (Simple Object Access Protocol), .NET- Framework oder andere Web-Dienste unterstützen, mit welchen der Server 5 und am Schluss das Endgerät 3 auf Dienste und Objekte des Servers 7 zugreifen kann. In diesem Fall umfasst das Verfahren die Bereitstellung von ausführbaren Programm-Code-Elementen oder SOAP- und/oder .NET-Diensten.

Der Server 5 lädt die gewünschte Seite aus dem Server 7 fern, und/oder greift auf den gewünschten Dienst (oder das Objekt an der angegebenen Adresse) zu, um die gewünschte Dienstleistung oder Information dem Benutzer des Endgeräts 1 bereitzustellen. Der Benutzer kann die gewünschte Information beispielsweise mit einem normalen Browser auf seinem Endgerät 3 wiedergeben.

Das mit der Figur 3 illustrierte System weist alle Merkmale des Systems der Figuren 1 und 2 auf, ausser dass der EPC-Code 100 von einer Anwendung 31 im Endgerät 3 ermittelt wird. Das Endgerät 3 kann beispielsweise ein Mobiltelefon, ein PDA oder eine Set-top Box sein und kann die benannte Anwendung durchführen, um den EPC-Code 100 zu lesen.

Der EPC-Code im Endgerät 3 kann permanent oder semi-permanent abgelegt werden, dynamisch generiert werden oder über das Mobilfunknetz 4 geladen werden. Der Code 100 kann beispielsweise verwendet werden, um Prozesse, Software, Programmteile, Daten, Dateien oder Operationen im Endgerät 3 eindeutig zu identifizieren und um einen assoziierten Inhalt aus einem Fernserver 7 zu holen.

In einer nicht dargestellten Variante ermittelt das Endgerät 3 den EPC-Code 100 aus einem magnetischen, optischen oder magneto-optischen Datenträger, der vom Endgerät gelesen wird. In noch einer anderen Variante wird der Code vom Endgerät über ein Fern-Telekommunikationsnetz ferngeladen, beispielsweise aus einem Web- oder WAP-Server. In noch einer Variante wird er über E-Mail, SMS, oder eine andere Art von Kurzmeldung vom Endgerät empfangen und an das EPC-Netz weitergeleitet. In noch einer anderen Variante wird der Code über ein personales Area Netzwerk (PAN) vom Endgerät gelesen, beispielsweise aus einem anderen personalen Endgerät oder aus einem Zahlungsterminal in der unmittelbaren Nähe.

Das mit der Figur 4 illustrierte System weist alle Merkmale des Systems der Figuren 1 bis 3 auf, ausser dass der EPC-Code 100 von einem EPC-Code-Generator 8 generiert wird und über eine Schnittstelle an das Endgerät 3 gesendet wird. Der EPC-Generator 8 kann vorzugsweise eine Vielzahl von unterschiedlichen EPC-Codes generieren; in einer Variante ist er programmierbar und kann somit beliebige EPC-Codes oder beliebige EPC-Codes in einem Bereich generieren. In einer Variante ist der EPC-Code Generator mit einem Objekt Namen Server 6 verbunden, um zu prüfen, ob der EPC-Code bereits einer PML-Seite zugeordnet ist. In noch einer anderen Variante kann der EPC-Code-Generator den EPC-Code generieren, der einer gewünschten PML-Seite entspricht, indem er eine entsprechende Abfrage an einen Objekt Namen Server sendet.

In einer Variante wird der EPC-Code-Generator über eine kontatlose, beispielsweise eine Funk-Schnittstelle mit dem Endgerät 3, verbunden. Der EPC-Code Generator 3 verwendet vorzugsweise ein Datenübertragungsprotokoll, welches auch von EPC-RFID-Lesegeräten für das Lesen von RFID-Tags verwendet wird, so dass generierte EPC-Codes auch von normalen EPC-kompatiblen RFID-Lesegeräten 2 gelesen werden können; in diesem Fall simuliert der EPC-Code Generator einen üblichen EPC-RFID-Tag, obwohl ihm kein fester EPC-Code zugeordnet ist.

Der vom Generator 8 generierte und vom Endgerät 3 ermittelte EPC-Code wird dann an den Objekt Namen Server 8 geleitet und wie im oben beschriebenen Verfahren behandelt, um den Inhalt der entsprechenden PML-Seite ins Endgerät 3 zu laden.

## Patentansprüche

1. Verfahren, mit welchem ein Endgerät (3) Informationen, die mit einem EPC-Code assoziiert werden, aus einem EPC-Netzwerk (4, 5, 6, 7) holen kann,
**dadurch gekennzeichnet, dass** der benannte EPC-Code (1000) ein virtueller Code ist.

2. Das Verfahren des Anspruchs 1, in welchem die benannte Information den Inhalt einer PML-Seite umfasst und wobei das Verfahren folgende Schritte umfasst:
das benannte Endgerät (3) sendet eine Meldung mit dem benannten EPC-Code über ein Telekommunikationsnetz (4) an einen Objekt Namen Server (6),
der Objekt Namen Server (6) beantwortet mit der Adresse der gewünschten PML-Seite,
das Endgerät (3) greift auf den Inhalt der benannten PML-Seite zu.

3. Das Verfahren eines der Ansprüche 1 bis 2, in welchem der benannte EPC-Code (1000) auf eine der folgenden Weisen vom Endgerät (3) ermittelt wird:
der EPC-Code wird aus einem Speicherbereich im benannten Endgerät (3) gelesen,
der EPC-Code wird aus einem Speicherbereich in einem Identifizierungsmodul (30) im benannten Endgerät (3) gelesen,
der EPC-Code wird aus einem magnetischen, optischen oder magneto-optischen Datenträger vom benannten Endgerät (3) gelesen,
der EPC-Code wird vom benannten Endgerät (3) über ein Fern-Telekommunikationsnetz ferngeladen,
der EPC-Code wird über ein personales Area Netzwerk (PAN) vom benannten Endgerät gelesen,
der EPC-Code wird von einer Software-Anwendung (31) im Endgerät (3) oder in einem Identifizierungsmodul (30) im Endgerät (3) dynamisch generiert.

4. Das Verfahren des Anspruchs 3, in welchem der benannte EPC-Code Parameter, die im Endgerät (3) ermittelt werden, enthält.

5. Das Verfahren eines der Ansprüche 1 bis 4, in welchem mehrere virtuelle EPC-Codes ermittelt werden.

6. Das Verfahren eines der Ansprüche 1 bis 5, in welchem immaterielle Güter mit dem benannten EPC-Code **gekennzeichnet** werden.

7. Das Verfahren eines der Ansprüche 1 bis 6, in welchem der EPC-Code eine Datei markiert.

8. Das Verfahren eines der Ansprüche 1 bis 6, in welchem der EPC-Code ein Computer-Programm markiert.

9. Das Verfahren eines der Ansprüche 1 bis 6, in welchem der EPC-Code ein Datenstream markiert.

10. Das Verfahren eines der Ansprüche 6 bis 9, in welchem der EPC-Code zum Schutz einer urhebergeschützten Ressource verwendet wird.

11. Das Verfahren eines der Ansprüche 1 bis 10, in welchem das benannte Endgerät ein Mobilgerät (3) ist,
und in welchem der Zugriff auf das benannte EPC-Netzwerk (4, 5, 6, 7) über ein Mobilfunknetz (4) erfolgt.

12. Das Verfahren eines der Ansprüche 1 bis 2, in welchem der benannte EPC-Code von einem EPC-Code-Generator (8) generiert wird, der eine Vielzahl von unterschiedlichen EPC-Codes generiert und über eine kontaktlose Schnittstelle an das benannte Endgerät (3) übertragen wird.

13. Das Verfahren des Anspruchs 12, in welchem die benannte kontaktlose Schnittstelle ein Datenübertragungsprotokoll verwendet, welches von EPC-RFID-Lesegeräten (2) für das Lesen von RFID-Tags (1) verwendet wird.

14. Das Verfahren eines der Ansprüche 12 oder 13, in welchem der benannte EPC-Code-Generator (8) programmierbar ist, um beliebige EPC-Codes in einem Bereich generieren zu können.

15. Vorrichtung (3, 30, 8) mit folgenden Merkmalen:
- Mittel, um EPC-Codes unabhängig von EPC-RFID zu generieren,
- Kommunikationsmittel, um die benannten EPC-Codes an ein EPC-Netzwerk (4, 5, 6, 7) zu senden.
